(19) Europäisches Patentamt
European Patent Office
Office européen des brevets

(11) **EP 2 655 150 B1**

(12) **EUROPÄISCHE PATENTSCHRIFT**

(45) Veröffentlichungstag und Bekanntmachung des Hinweises auf die Patenterteilung:
**27.01.2016 Patentblatt 2016/04**

(21) Anmeldenummer: **11788141.7**

(22) Anmeldetag: **24.11.2011**

(51) Int Cl.:
***B60T 13/52*** *(2006.01)*

(86) Internationale Anmeldenummer:
**PCT/EP2011/070902**

(87) Internationale Veröffentlichungsnummer:
**WO 2012/084403 (28.06.2012 Gazette 2012/26)**

(54) **VERFAHREN ZUR KALIBRIERUNG EINES AUS EINEM DRUCKSENSORSIGNAL BERECHNETEN AUSSTEUERPUNKTES EINES PNEUMATISCHEN BREMSKRAFTVERSTÄRKERS**

METHOD FOR CALIBRATING A MODULATION POINT OF A PNEUMATIC BRAKE BOOSTER WHICH IS CALCULATED ON THE BASIS OF A PRESSURE SENSOR SIGNAL

PROCÉDÉ D'ÉTALONNAGE D'UN POINT DE RÉGLAGE D'UN SERVOFREIN PNEUMATIQUE CALCULÉ À PARTIR D'UN SIGNAL DE CAPTEUR DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2010 DE 102010063838**

(43) Veröffentlichungstag der Anmeldung:
**30.10.2013 Patentblatt 2013/44**

(73) Patentinhaber: **Robert Bosch GmbH**
**70442 Stuttgart (DE)**

(72) Erfinder:
• **BRUEX, Thomas**
**71720 Oberstenfeld (DE)**
• **BUSSMANN, Otmar**
**74232 Abstatt (DE)**

(56) Entgegenhaltungen:
**WO-A1-03/066405      DE-A1- 10 218 972**
**US-A1- 2003 052 534**

**Beschreibung**

Die Erfindung betrifft ein Verfahren zur Kalibrierung eines aus einem Drucksensorsignal berechneten Aussteuerpunktes eines pneumatischen Bremskraftverstärkers gemäß Oberbegriff des Patentanspruchs 1. Ferner betrifft die Erfindung eine Vorrichtung zur Durchführung des erfindungsgemäßen Verfahrens.

Stand der Technik

Informationen über die Druckverhältnisse in einem pneumatischen Bremskraftverstärker werden bspw. dazu genutzt, dessen Aussteuerzustand, also den Aussteuerpunkt zu bestimmen, ab dem der Bremskraftverstärker nicht mehr in der Lage ist, eine weitere Druckerhöhung zu unterstützen. Daher wird bekannter weise dieses Problem dadurch gelöst, dass bei Erreichen des Aussteuerpunktes auf eine hydraulische Verstärkung umgeschaltet wird, indem hierzu bspw. das Hydroaggregat eines Fahrdynamikregelsystems, z. Bsp. ein ESP-System verwendet wird, um zusätzlich Bremsdruck aufzubauen. Für einen komfortablen Übergang zwischen der pneumatischen Verstärkung des Bremskraftverstärkers und der hydraulischen Verstärkung mittels bspw. der ESP-Funktion ist es notwendig, diesen Aussteuerpunkt möglichst exakt zu bestimmen.

So ist aus der gattungsbildenden DE 10 2005 009 423 A1 bekannt, allein aus den Sensorsignalen eines den Vakuumdruck einer Vakuumkammer eines Bremskraftverstärkers detektierenden Drucksensors den Aussteuerpunkt mit Hilfe einer mathematischen Funktion zu berechnen, wobei hierzu eine lineare Gleichung mit zwei Parametern verwendet wird. Diese Parameter werden mittels eines Kalibrierverfahrens ermittelt, bei dem der Druckunterschied zwischen der Arbeitskammer und der Vakuumkammer des Bremskraftverstärkers in einem ersten Schritt erhöht wird, bis der Aussteuerpunkt sicher überschritten ist und anschließend der Druckunterschied danach wieder abgebaut wird, wobei das Ausgangssignal des Drucksensors ausgewertet und der Aussteuerpunkt als Minimum dieses Druckverlaufs detektiert wird.

Ferner ist es beispielsweise aus der Veröffentlichung WO03/066405A1, bekannt, den Aussteuerpunkt über den von einem den Druck in der Arbeitskammer eines Bremskraftverstärkers erfassenden Drucksensor zu bestimmen oder hierzu den gemessenen Druck sowohl der Vakuumkammer als auch der Arbeitskammer des Bremskraftverstärkers zu verwenden.

Die Genauigkeit des mit den bekannten Methoden bestimmten Aussteuerpunktes hängt vor allem von Bauteiltoleranzen der Drucksensoren und des Bremskraftverstärkers ab.

Offenbarung der Erfindung

Erfindungsgemäß wird ein Verfahren mit den Merkmalen des Patentanspruchs 1 sowie eine Vorrichtung zur Durchführung dieses Verfahrens mit den Merkmalen des Patentanspruchs 11 vorgeschlagen.

Dieses Verfahren stellt eine einfache Methode zur Verfügung, mittels der ein Aussteuerpunkt, der allein auf der Basis der Messwerte eines den Vakuumdruck der Vakuumkammer und/oder den Arbeitsdruck einer Arbeitskammer eines Bremskraftverstärkers sensierenden Drucksensors berechnet wird, kalibriert werden kann. Ferner ermöglicht dieses erfindungsgemäße Verfahren das einfache Erkennen eines Signalfehlers des zur Detektion des Vakuumdrucks und/oder Arbeitsdrucks eingesetzten Drucksensors.

Dies wird erfindungsgemäß durch folgende Verfahrensschritte erreicht:

a) Ermitteln des Hauptbremszylinderdrucks und des Pedalwegs,
b) Erzeugen des Quotienten aus Hauptbremszylinderdruck und Pedalweg,
c) Bestimmen eines lokalen Maximums des Gradienten-Verlaufs des Quotienten aus Hauptbremszylinderdruck und Pedalweg,
d) Bestimmen eines weiteren Aussteuerpunktes als denjenigen Wert des Hauptbremszylinderdruckes, der dem in Verfahrensschritt c) bestimmten lokalen Maximum entspricht, und
e) Korrektur des berechneten Aussteuerpunktes mittels des in Verfahrensschritt d) bestimmten weiteren Aussteuerpunktes.

Die Erfindung zeichnet sich durch die Nutzung eines Effekt aus, bei welchem sich das Verhältnis von Pedalweg zu erzeugtem Hauptbremszylinderdruck im Aussteuerpunkt ändert, nämlich in der Weise, dass sich bei konstant ansteigendem Pedalweg es kurzzeitig zu einer Verringerung des Druckanstiegs kommt. Dies liegt daran, dass die Reaktionsscheibe zwischen der Vakuumkammer und der Arbeitskammer des Bremskraftverstärkers im Ansteuerpunkt stark eingedrückt wird. Daher wird erfindungsgemäß zur Erkennung dieses Bereiches verringerten Druckanstiegs der Quotient aus dem Hauptbremszylinderdruck und dem Pedalweg gebildet und dessen Gradient ausgewertet.

Daher besteht aufgrund der Verwendung dieser beiden Größen Hauptbremszylinderdruck und Pedalweg ein weiterer Vorteil darin, dass diese Größen äußerst robust gegenüber Offset- und Steigungsfehler der hierfür verwendeten Sensoren sind.

In einer vorteilhaften Ausgestaltung der Erfindung wird das lokale Maximum gemäß Verfahrensschritt c) bei einem positiven Pedalweg oder einem positiven Gradienten des Hauptbremszylinderdrucks und bei einem Wechsel des Gradienten des Quotienten aus Hauptbremszylinderdruck und Pedalweg von einem positiven zu einem negativen Wert bestimmt. Die entsprechende Realisierung ist mit marktüblichen und daher kostengünstigen elektronischen Bauteilen möglich.

Ferner ist es gemäß einer Weiterbildung der Erfindung besonders vorteilhaft, wenn die Korrektur des berechneten Aussteuerpunktes in Abhängigkeit des Gradienten des Verlaufs der Werte des Pedalwegs durchgeführt wird, da die Erkennung des Aussteuerpunktes umso genauere Ergebnisse liefert, je langsamer das Bremspedal betätigt wird.

Weiterhin wird gemäß einer weiteren Ausgestaltung der Erfindung die Korrektur des berechneten Aussteuerpunktes nur durchgeführt, wenn die Differenz aus dem berechneten Aussteuerpunkt und dem nach Verfahrensschritt d) bestimmten weiteren Aussteuerpunkt kleiner als ein vorgegebener Schwellwert ist. Dies ist daher vorteilhaft, da eine diesen Schwellwert übersteigende Differenz als Drucksensorfehler des den Vakuumdruck oder den Arbeitsdruck des Bremskraftverstärkers sensierenden Drucksensors detektiert wird. Somit kann leicht ein größerer Signalfehler eines solchen Drucksensors erkannt werden.

Gemäß einer vorteilhaften Weiterbildung der Erfindung wird mittels eines Algorithmus mit wenigstens einem Parameter der Aussteuerpunkt aus den Werten des Drucksensors berechnet, vorzugsweise mittels einer linearen Funktion mit zwei Parametern. Weiterbildungsgemäß werden dann solche Parameter des Algorithmus mittels des nach Verfahrensschritt d) bestimmten weiteren Aussteuerpunktes korrigiert.

In einer weiteren Ausgestaltung der Erfindung werden die korrigierten Parameter des zur Berechnung des Aussteuerpunktes verwendeten Algorithmus gespeichert, um auch in einem nächsten Zündungszyklus des zugehörigen Fahrzeugs diese korrigierten Parameter zur Berechnung des Aussteuerpunktes verwenden werden können.

Schließlich ist es vorteilhaft gemäß einer Weiterbildung der Erfindung die Signalgüte der den Hauptbremszylinderdruck und den Pedalweg sensierenden Sensoren vor Durchführung der Verfahrensschritte a) und b) mittels Tiefpassfilter zu filtern.

Mit der vorgeschlagenen Vorrichtung zur Durchführung des erfindungsgemäßen Verfahrens wird eine einfache Realisierung möglich, da in der Regel die erforderlichen Bauteile bereits vorhanden sind, so z. Bsp. der Drucksensor zur Messung des Hauptbremszylinderdrucks, der bspw. in jedem ESP-Aggregat gemessen wird sowie der Pedalweg-Sensor, der oft als Bremslichtschalterersatz oder bei Rekuperationsbremssystemen bereits eingesetzt wird.

Kurze Beschreibung der Zeichnungen

Die Erfindung wird nachfolgend anhand von Ausführungsbeispielen unter Bezugnahme auf die beigefügten Figuren ausführlich beschrieben. Es zeigen:

Figur 1     ein schematisches Blockschaltbild einer Bremsanlage eines Kraftfahrzeugs zur Erläuterung des erfindungsgemäßen Verfahrens,

Figur 2     ein Weg-Druck-Diagramm zur Darstellung des Hauptbremszylinderdrucks in Abhängigkeit des Pedalwegs,

Figur 3     ein Diagramm zur Darstellung des Gradienten-Verlaufs aus dem Quotienten des Hauptbremszylinderdrucks und des Pedalwegs nach Figur 2, und

Figur 4     eine schematisches Blockschaltbild zur Durchführung des erfindungsgemäßen Verfahrens.

Ausführungsformen der Erfindung

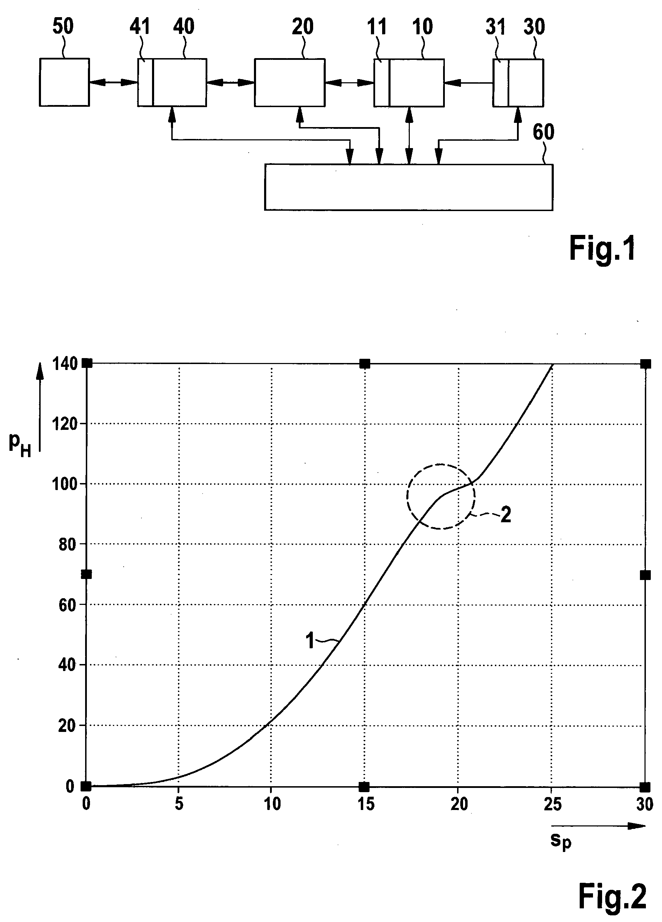

Die in Figur 1 für das Ausführungsbeispiel geeignete Bremsanlage für Kraftfahrzeuge besteht bspw. aus einem Tandem-Hauptbremszylinder 20, der mit einem pneumatischen Bremskraftverstärker 10 in Wirkverbindung steht. Der Bremskraftverstärker 10 wird durch ein Bremspedal 30 betätigt. Der Tandem-Hauptbremszylinder 20 erzeugt einen Druck, der im Hydroaggregat 40 moduliert wird, welches bekanntermaßen Bremsleitungen, Pumpen, Trennventile und Umschaltventile aufweist. Die Bremsleitungen dieses Hydroaggregates 40 verzweigen sich in Radbremsen 50 des Kraftfahrzeugs.

Zur Messung des Hauptbremszylinderdrucks $p_H$ weist das Hydroaggregat 40 einen Drucksensor 41 auf, der Vakuumdruck der Vakuumkammer des Bremskraftverstärkers 10 wird mittels eines Drucksensors 11 erfasst. Zur Messung des Pedalwegs $s_p$ dient ein Wegsensor 31 des Bremspedals 30. Diese Sensorsignale werden zur Auswertung über Datenleitungen einem Bremssteuergerät 60 der Bremsanlage zugeführt, welches auf der Basis dieser und ggf. weiterer Sensordaten die Steuerung dieser Bremsanlage durchführt.

Aus dem Sensorsignal des den Vakuumdruck des Vakuumkammer des Bremskraftverstärkers 10 sensierenden Drucksensors 11 wird der Aussteuerpunkt mittels eines Algorithmus berechnet. Zur Berechnung des Bremsdrucks $p_{AP}$ im Aussteuerpunkt durch das Bremssteuergerät 60 kann bspw. die in der als Stand der Technik gewürdigten DE 10 2005 009 423 A1 angeführte mathematische Funktion in Form folgender linearen Gleichung

$$p_{AP} = m \cdot p_V + b$$

verwendet werden, wobei $p_V$ den Vakuumdruck in der Vakuumkammer des Bremskraftverstärkers 10 und m sowie b zwei Variablen bezeichnen.

Mit dem im Folgenden zu erläuternden Verfahren gemäß Ausführungsbeispiel kann dieser berechnete Aussteuerpunkt $p_{AB}$ korrigiert bzw. kalibriert werden, indem die Berechnungsfaktoren, also bei Verwendung der oben angeführten Gleichung die Variablen m und b angepasst werden.

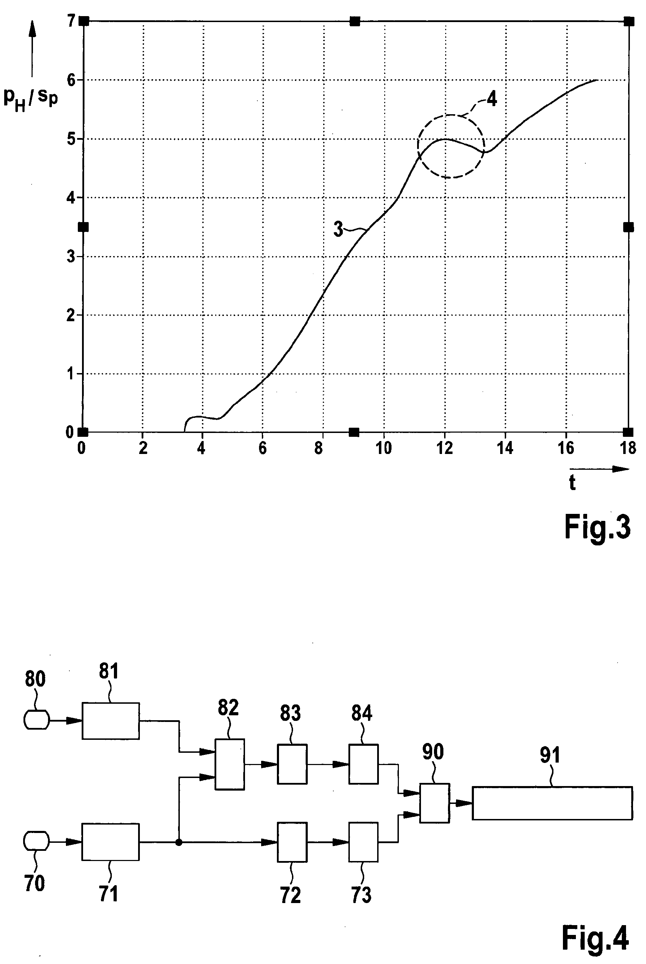

Zur Durchführung des Verfahrens gemäß Ausführungsbeispiel werden von dem Bremssteuergerät 60 der Hauptbremszylinderdrucks $p_H$ und der Pedalweg $s_p$ erfasst und entsprechend den in Figur 4 dargestellten Funktionsblöcken von dem Bremssteuergerät 60 ausgewertet.

Das Verfahren nutzt den Effekt, dass sich das Verhältnis von Pedalweg $s_p$ und Hauptbremszylinderdruck $p_H$ im Aussteuerpunkt in der Weise ändert, dass zunächst bei konstant ansteigendem Pedalweg $s_p$ es im Aussteuerpunkt kurzzeitig zu einer Verringerung des Druckanstiegs kommt, wie dies mit der Kennlinie 1 des Druck-Weg-Diagramms nach Figur 2 dargestellt ist. In dem mit dem Bezugszeichen 2 gekennzeichneten Bereich ist deutlich der verringerte Druckanstieg zu erkennen. Dieser verringerte Druckanstieg kommt dadurch zustande, dass die die Vakuumkammer und Arbeitskammer des Bremskraftverstärkers 10 trennende Reaktionsscheibe in diesem Bereich 2 stark eingedrückt wird.

Daher werden gemäß Figur 4 der Pedalweg $s_p$ einem Eingang 70 und der Hauptbremszylinderdruck $p_H$ einem Eingang 80 zugeführt. Beide Größen werden jeweils mittels eines Tiefpassfilters 71 bzw. 81 gefiltert und nachfolgend einem Quotientenbildner 82 zur Bildung des Quotienten $p_H/s_p$ aus Hauptbremszylinderdruck $p_H$ und Pedalweg $s_p$ zugeführt.

Der Beginn der Phase des verringerten Druckanstiegs (Bereich 2 in Figur 2) zeichnet sich dadurch aus, dass dieser Quotient $p_H/s_p$ aus Hauptbremszylinderdruck $p_H$ und Pedalweg $s_p$ ein lokales Maximum ausbildet, wie dies in dem Diagramm nach Figur 3 dargestellt ist, das den Verlauf dieses Quotienten $p_H/s_p$ in Abhängigkeit der Zeit als Kurve 3 mit dem dieses Maximum kennzeichnenden Bereich 4 zeigt. Daher wird zur Erkennung dieses Bereiches 4 mit einem Funktionsblock 83 der Figur 4 der Gradient gebildet und anschließend mittels eines Funktionsblockes 84 geprüft, wann dieser Gradient negative Werte annimmt. Gegebenenfalls wird ein logische Eins an einen Eingang eines UND-Gatters 90 gelegt.

Damit mit hoher Sicherheit dieses lokale Maximum (Bereich 4) erkannt wird, wird aus dem tiefpassgefilterten Signal des Pedalwegs $s_p$ dessen Gradient mittels eines Funktionsblockes 72 erzeugt und anschließend anhand eines weiteren Funktionsblock dessen Vorzeichenverlauf geprüft. Bei Detektion eines positiven Pedalwegs $s_p$ wird ebenfalls eine logische Eins an einem weiteren Eingang des UND-Gatters 90 angelegt, so dass an dessen Ausgang eine logische Eins erzeugt wird, infolgedessen in einem letzten Funktionsblock 91 der zugehörige Hauptbremszylinderdruck $p_H$ als weiterer Aussteuerpunkt bestimmt wird.

Wenn also die beide Bedingungen, nämlich Vorliegen eines positiven Wertes des Pedalwegs $s_p$ (d. h. das Pedal wird betätigt) und eines negativen Wertes des Gradienten aus dem Quotienten $p_H/s_p$ des Hauptbremszylinderdrucks $p_H$ und des Pedalwegs $s_p$, wird ein Aussteuerpunkt erkannt. Die Bedingung "positiver Wert des Pedalwegs $s_p$" kann auch durch die Bedingung "positiver Wert des Hauptbremszylinderdrucks $p_H$" ersetzt werden.

Im niedrigen Druck- bzw. Pedalwegbereich kann es aufgrund von Rauschen auf den Sensorsignalen zu Fehlerkennungen kommen. Um diese zu minimieren wird zusätzlich zu den oben genannten Bedingungen zur Erkennung des weiteren Aussteuerpunktes dessen Erkennungsbereich entweder absolut oder in Abhängigkeit vom berechneten Aussteuerpunkt eingeschränkt werden.

Mit dem derart bestimmten weiteren Aussteuerpunkt wird der gleichzeitig auf der Basis des Sensorsignals des den Vakuumdruck des Bremskraftverstärkers 10 sensierenden Drucksensors 11 berechnete Aussteuerpunkt $p_{AB}$ korrigiert bzw. angepasst, wie dies weiter oben beschrieben wurde.

Eine Korrektur des berechneten Aussteuerpunktes $p_{AB}$ erfolgt in Abhängigkeit der Differenz aus von dem mit dem Verfahren gemäß Ausführungsbeispiel bestimmten weiteren Aussteuerpunkt und dem berechneten Aussteuerpunkt $p_{AB}$. Ist diese Differenz kleiner als ein vorbestimmter Schwellwert, wird diese Korrektur durchgeführt. Die entsprechenden Korrekturfaktoren können innerhalb des Bremssteuergerätes 60 gespeichert werden so dass diese im nächsten Zündzyklus, also beim nächsten Start des Fahrzeugs wieder verwendet werden können, bzw. wenn wieder eine Abweichung zwischen dem berechneten und dem mit dem beispielgemäßen Verfahren bestimmten weiteren Aussteuerpunkt auftritt.

Falls die Differenz zwischen dem berechneten Aussteuerpunkt $p_{AB}$ und dem beispielgemäßen bestimmten weiteren Aussteuerpunkt größer als der vorbestimmte Schwellwert ist, zeigt dies einen Offsetfehler des den Vakuumdruck messenden Drucksensors 11 des Bremskraftverstärkers 10 an, falls kein Fehler des Drucksensors 21 des Tandem-Hauptbremszylinders 20 oder des Wegsensors 31 des Bremspedals 30 vorliegt.

60 Für die Berechnung des Aussteuerpunkts werden die Sensordaten des den Vakuumdruck der Vakuumkammer des Bremskraftverstärkers 10 sensierenden Drucksensors 11 verwendet. Es ist auch möglich, diese Berechnung des Ansteuerpunkts mit den Sensordaten eines den Arbeitsdruck der Arbeitskammer eines Bremskraftverstärkers zu verwenden und diesen derart berechneten Ansteuerpunkt mittels des beispielgemäßen Verfahrens zu korrigieren. Wenn der Bremskraftverstärkers 10 zwei Drucksensoren aufweist, einen zur Messung des Vakuumdrucks der Vakuumkammer und den anderen zur Messung des Arbeitsdrucks der Arbeitskammer des Bremskraftverstärkers, können die Sensordaten beider Drucksensoren zur Berechnung des Aussteuerpunkts verwendet und entsprechend des Verfahrens gemäß Ausführungsbeispiel korrigiert werden.

**Patentansprüche**

1. Verfahren zur Kalibrierung eines aus wenigstens einem Drucksensorsignal berechneten Aussteuerpunktes eines pneumatischen Bremskraftverstärkers (10), bei dem mittels eines das Drucksensorsignal erzeugenden Drucksensors (11) der Vakuumdruck einer Vakuumkammer und/oder der Arbeitsdruck einer Arbeitskammer des Bremskraftverstärkers (10) ermittelt wird und die Vakuumkammer des Bremskraftverstärkers (10) zur Erzeugung eines Hauptbremszylinderdruckes in Abhängigkeit des Pedalwegs eines Bremspedals (30) mit einem Hauptbremszylinder (20) wirkverbindbar ist, **gekennzeichnet durch** folgende Verfahrensschritte:

   a) Ermitteln des Hauptbremszylinderdrucks ($p_H$) und des Pedalwegs ($s_p$),
   b) Erzeugen des Quotienten ($p_H/s_p$) aus Hauptbremszylinderdruck ($p_H$) und Pedalweg ($s_p$),
   c) Bestimmen eines lokalen Maximums (4) des Gradienten-Verlaufs des Quotienten ($p_H/s_p$) aus Hauptbremszylinderdruck ($p_H$) und Pedalweg ($s_p$),
   d) Bestimmen eines weiteren Aussteuerpunktes als denjenigen Wert des Hauptbremszylinderdruckes ($p_H$), der dem in Verfahrensschritt c) bestimmten lokalen Maximum (4) entspricht, und
   e) Korrektur des berechneten Aussteuerpunktes mittels des in Verfahrensschritt d) bestimmten weiteren Aussteuerpunktes.

2. Verfahren nach Anspruch 1, **dadurch gekennzeichnet, dass** das lokale Maximum (4) gemäß Verfahrensschritt c) bei einem positiven Pedalweg ($s_p$) oder einem positiven Gradienten des Hauptbremszylinderdrucks ($p_H$) und bei einem Wechsel des Gradienten des Quotienten ($p_H/s_p$) aus Hauptbremszylinderdruck ($p_H$) und Pedalweg ($s_p$) von einem positiven zu einem negativen Wert bestimmt wird.

3. Verfahren nach Anspruch 1 oder 2, **dadurch gekennzeichnet, dass** die Korrektur des berechneten Aussteuerpunktes in Abhängigkeit des Gradienten des Verlaufs der Werte des Pedalwegs ($s_p$) durchgeführt wird.

4. Verfahren nach Anspruch 1, 2 oder 3, **dadurch gekennzeichnet, dass** die Korrektur des berechneten Aussteuerpunktes nur durchgeführt wird, wenn die Differenz aus dem berechneten Aussteuerpunkt und dem nach Verfahrensschritt d) bestimmten weiteren Aussteuerpunkt kleiner als ein vorgegebener Schwellwert ist.

5. Verfahren nach einem der vorhergehenden Ansprüche, **dadurch gekennzeichnet, dass** bei einer Differenz zwischen dem berechneten Aussteuerpunkt und dem nach Verfahrensschritt d) bestimmten weiteren Aussteuerpunkt, die größer als ein vorgegebener Schwellwert ist, ein Drucksensorfehler detektiert wird.

6. Verfahren nach einem der vorhergehenden Ansprüche, **dadurch gekennzeichnet, dass** mittels eines Algorithmus mit wenigstens einem Parameter der Aussteuerpunkt aus den Werten des Drucksensors (11) berechnet wird.

7. Verfahren nach Anspruch 6, **dadurch gekennzeichnet, dass** als Algorithmus eine lineare Funktion mit zwei Parametern verwendet wird.

8. Verfahren nach Anspruch 6 oder 7, **dadurch gekennzeichnet, dass** der bzw. die Parameter des Algorithmus mittels des nach Verfahrensschritt d) bestimmten weiteren Aussteuerpunktes korrigiert wird bzw. werden.

9. Verfahren nach Anspruch 8, **dadurch gekennzeichnet, dass** die korrigierten Parameter zur Nutzung in einem nächsten Zündungszyklus gespeichert werden.

10. Verfahren nach einem der vorhergehenden Ansprüche, **dadurch gekennzeichnet, dass** der Hauptbremszylinderdruck ($p_H$) und der Pedalweg ($s_p$) mittels jeweils eines Sensors (41, 31) ermittelt wird und die Sensorsignale vor Durchführung der Verfahrensschritte a) und b) tiefpassgefiltert werden.

11. Vorrichtung zur Kalibrierung eines aus wenigstens einem Drucksensorsignal berechneten Aussteuerpunktes eines pneumatischen Bremskraftverstärkers (10), bei dem mittels eines das Drucksensorsignal erzeugenden Drucksensors (11) der Vakuumdruck einer Vakuumkammer und/oder der Arbeitsdruck einer Arbeitskammer des Bremskraftverstärkers (10) ermittelt wird und die Vakuumkammer des Bremskraftverstärkers (10) zur Erzeugung eines Hauptbremszylinderdruckes in Abhängigkeit des Pedalwegs eines Bremspedals (30) mit einem Hauptbremszylinder (20) wirkverbindbar ist, insbesondere nach einem der vorhergehenden Ansprüche, **dadurch gekennzeichnet, dass**

   - ein Drucksensor (41) zum Ermitteln des Hauptbremszylinderdrucks ($p_H$) und ein Wegsensor (31) zum Ermitteln des Pedalwegs ($s_p$) vorge-

sehen sind,

- ein Quotientenbildner (82) zum Erzeugen des Quotienten ($p_H/s_p$) aus Hauptbremszylinderdruck ($p_H$) und Pedalweg ($s_p$) vorgesehen ist,
- ein Funktionsblock (83) zur Gradientenbildung des Quotienten ($p_H/s_p$) aus Hauptbremszylinderdruck ($p_H$) und Pedalweg ($s_p$) vorgesehen ist,
- ein Funktionsblock (84) zum Bestimmen eines lokalen Maximums (4) des Gradienten-Verlaufs des Quotienten ($p_H/s_p$) aus Hauptbremszylinderdruck ($p_H$) und Pedalweg ($s_p$) vorgesehen ist,
- Funktionsblöcke (90, 91) zum Bestimmen eines weiteren Aussteuerpunktes als denjenigen Wert des Hauptbremszylinderdruckes ($p_H$), der dem bestimmten lokalen Maximum (4) entspricht, vorgesehen ist, und

e) mittels eines Steuergerätes (60) eine Korrektur des berechneten Aussteuerpunktes mittels des bestimmten weiteren Aussteuerpunktes durchgeführt wird.

**12.** Vorrichtung nach Anspruch 11,
**dadurch gekennzeichnet, dass** mittels eines Funktionsblockes (72) der Gradient des Pedalweges ($s_p$) gebildet wird, der anschließend mittels eines Funktionsblockes (73) hinsichtlich seines Vorzeichens ausgewertet wird.

**13.** Vorrichtung nach Anspruch 12,
**dadurch gekennzeichnet, dass** zum Bestimmen des weiteren Aussteuerpunktes der Funktionsblock (90) als UND-Gatter ausgebildet ist, dem die Ausgangssignale des Funktionsblockes (84) zum Bestimmen des lokalen Maximums (4) und der Funktionsblock (73) zur Auswertung des Vorzeichens des Gradienten des Pedalweges ($s_p$) zugeführt werden.

**14.** Vorrichtung nach einem der Ansprüche 11 bis 13,
**dadurch gekennzeichnet, dass** die Sensorsignale des Drucksensors (21) zum Ermitteln des Hauptbremszylinderdrucks ($p_H$) und des Wegsensors (31) zum Ermitteln des Pedalwegs ($s_p$) jeweils mittels eines Tiefpassfilters (71, 81) gefiltert werden.

## Claims

**1.** Method for calibrating a modulation point, calculated from at least one pressure sensor signal, of a pneumatic brake booster (10), in which the vacuum pressure of a vacuum chamber and/or the working pressure of a working chamber of the brake booster (10) is determined by means of a pressure sensor (11) which generates the pressure sensor signal, and the vacuum chamber of the brake booster (10) can be operatively connected to a master brake cylinder (20) in order to generate a master brake cylinder pressure as a function of the pedal travel of a brake pedal (30), **characterized by** the following steps:

a) determining the master brake cylinder pressure ($p_H$) and the pedal travel ($s_p$),
b) generating the quotient ($p_H/s_p$) of the master brake cylinder pressure ($p_H$) and the pedal travel ($s_p$),
c) determining a local maximum (4) of the gradient profile of quotient ($p_H/s_p$) of the master brake cylinder pressure ($p_H$) and the pedal travel ($s_p$),
d) determining a further modulation point as that value of the master brake cylinder pressure ($p_H$) which corresponds to the local maximum (4) determined in method step c), and
e) correcting the calculated modulation point by means of the further modulation point determined in method step d).

**2.** Method according to Claim 1,
**characterized in that** the local maximum (4) according to method step c) is determined in the case of a positive pedal travel ($s_p$) or a positive gradient of master brake cylinder pressure ($p_H$) and in the case of a changeover of the gradient of the quotient ($p_H/s_p$) of the master brake cylinder pressure ($p_H$) and the pedal travel ($s_p$) from a positive to a negative value.

**3.** Method according to Claim 1 or 2,
**characterized in that** the correction of the calculated modulation point is carried out as a function of the gradient of the profile of the values of the pedal travel ($s_p$).

**4.** Method according to Claim 1, 2, or 3
**characterized in that** the correction of the calculated modulation point is carried out only if the difference between the calculated modulation point and the further modulation point determined according to method step d) is smaller than a predefined threshold value.

**5.** Method according to one of the preceding claims,
**characterized in that** in the event of a difference between the calculated modulation point and the further modulation point which is determined according to method step d) which is greater than a predefined threshold value, a pressure sensor fault is detected.

**6.** Method according to one of the preceding claims,
**characterized in that** the modulation point is calculated from the values of the pressure sensor (11) by means of an algorithm with at least one parameter.

**7.** Method according to Claim 6,

**characterized in that** a linear function with two parameters is used as the algorithm.

8. Method according to Claim 6 or 7,
**characterized in that** the parameter or parameters of the algorithm is/are corrected by means of the further modulation point determined according to method step d).

9. Method according to Claim 8,
**characterized in that** the corrected parameters are stored for use in a subsequent ignition cycle.

10. Method according to one of the preceding claims,
**characterized in that** the master brake cylinder pressure ($p_H$) and the pedal travel ($s_p$) are determined by a means of a respective sensor (41, 31), and the sensor signals are low-pass filtered before the execution of the method steps a) and b).

11. Device for calibrating a modulation point, calculated from at least one pressure sensor signal, of a pneumatic brake booster (10), in which the vacuum pressure of a vacuum chamber and/or the working pressure of a working chamber of the brake booster (10) are determined by means of a pressure sensor (11) which generates the pressure sensor signal, and the vacuum chamber of the brake booster (10) can be operatively connected to a master brake cylinder (20) in order to generate a master brake cylinder pressure as a function of the pedal travel of a brake pedal (30), in particular according to one of the preceding claims,
**characterized in that**

    - a pressure sensor (41) is provided for determining the master brake cylinder pressure ($p_H$) and a travel sensor (31) is provided for determining the pedal travel ($s_p$),
    - a quotient former (82) for generating the quotient ($p_H/s_p$) of the master brake cylinder pressure ($p_H$) and pedal travel ($s_p$) is provided,
    - a functional block (83) for forming a gradient of the quotient ($p_H/s_p$) of the master brake cylinder pressure ($p_H$) and the pedal travel ($s_p$) is provided,
    - a functional block (84) for determining a local maximum (4) of the gradient profile of the quotient ($p_H/s_p$) of the master brake cylinder pressure ($p_H$) and pedal travel ($s_p$) is provided,
    - functional blocks (90, 91) are provided for determining a further modulation point as that value of the master brake cylinder pressure ($p_H$) which corresponds to the determined local maximum (4), and

e) a correction of the calculated modulation point by means of the determined further modulation point is carried out by means of a control device (60).

12. Device according to Claim 11,
**characterized in that**
the gradient of the pedal travel ($s_p$) is formed by means of a functional block (72) and is subsequently evaluated in terms of its sign by means of a functional block (73).

13. Device according to Claim 12,
**characterized in that**, in order to determine the further modulation point, the functional block (90) is embodied as an AND gate to which the output signals of the functional block (84) for determining the local maximum (4) and of the functional block (73) for evaluating the sign of the gradient of the pedal travel ($s_p$) are fed.

14. Device according to one of Claims 11 to 13,
**characterized in that** the sensor signals of the pressure sensor (21) for determining the master brake cylinder pressure ($p_H$) and of the travel sensor (31) for determining the pedal travel ($s_p$) are each filtered by means of low pass filter (71, 81).

**Revendications**

1. Procédé d'étalonnage d'un point d'activation, calculé à partir d'au moins un signal de capteur de pression, d'un amplificateur pneumatique (10) de force de freinage, dans lequel
la dépression qui règne dans une chambre sous vide et/ou la pression de travail d'une chambre de travail de l'amplificateur (10) de force de freinage sont déterminées au moyen d'un capteur de pression (11) qui forme le signal de capteur de pression,
la chambre sous vide de l'amplificateur (10) de force de freinage peut être raccordée fonctionnellement à un cylindre principal (20) de frein pour former une pression de cylindre principal de frein en fonction de la course de la pédale de frein (30),
**caractérisé par** les étapes de procédé suivantes :

    a) détermination de la pression ($p_H$) du cylindre principal de frein et de la course ($s_p$) de pédale,
    b) formation du quotient ($p_H/s_p$) entre la pression ($p_H$) qui règne dans le cylindre principal de frein et la course ($s_p$) de la pédale,
    c) détermination d'un maximum local (4) ($p_H/s_p$) du quotient entre la pression ($p_H$) qui règne dans le cylindre principal de frein et la course ($s_p$) de la pédale,
    d) détermination d'un autre point d'activation comme valeur de la pression ($p_H$) qui règne dans le cylindre principal de frein qui correspond au maximum local (4) déterminé à l'étape c) du procédé et

e) correction du point d'activation calculé au moyen de l'autre point d'activation déterminé à l'étape d) du procédé.

2. Procédé selon la revendication 1, **caractérisé en ce que** le maximum local (4) de l'étape c) du procédé est déterminé à une course positive ($s_p$) de la pédale ou à un gradient positif de la pression ($p_H$) qui règne dans le cylindre principal de frein et lors d'un passage du gradient du quotient ($p_H/s_p$) entre la pression ($p_H$) qui règne dans le cylindre principal de frein et la course ($s_p$) de la pédale d'une valeur positive à une valeur négative.

3. Procédé selon les revendications 1 ou 2, **caractérisé en ce que** la correction du point d'activation calculé est réalisée en fonction du gradient de l'évolution des valeurs de la course ($s_p$) de la pédale.

4. Procédé selon les revendications 1, 2 ou 3, **caractérisé en ce que** la correction du point d'activation calculé n'est réalisée que si la différence entre le point d'activation calculé et l'autre point d'activation déterminé dans l'étape d) du procédé est inférieure à une valeur de seuil prédéterminée.

5. Procédé selon l'une des revendications précédentes, **caractérisé en ce qu'**un défaut du capteur de pression est détecté en cas d'une différence entre le point d'activation calculé et l'autre point d'activation déterminé dans l'étape d) du procédé supérieure à une valeur de seuil prédéterminée.

6. Procédé selon l'une des revendications précédentes, **caractérisé en ce que** le point d'activation est calculé à partir des valeurs du capteur de pression (11) au moyen d'un algorithme à au moins un paramètre,.

7. Procédé selon la revendication 6, **caractérisé en ce que** l'algorithme utilise une fonction linéaire à deux paramètres.

8. Procédé selon les revendications 6 ou 7, **caractérisé en ce que** le ou les paramètres de l'algorithme sont corrigés à l'aide de l'autre point d'activation déterminé à l'étape d) du procédé.

9. Procédé selon la revendication 8, **caractérisé en ce que** les paramètres corrigés sont conservés en mémoire pour être utilisés dans un prochain cycle d'allumaqe.

10. Procédé selon l'une des revendications précédentes, **caractérisé en ce que** la pression ($p_H$) qui règne dans le cylindre principal de frein et la course ($s_p$) de la pédale sont déterminées chacune au moyen d'un capteur (41, 31) respectif et **en ce que** les signaux des capteurs subissent un filtrage passe-bas avant l'exécution des étapes a) et b) du procédé.

11. Ensemble d'étalonnage d'un point d'activation, calculé à partir d'au moins un signal de capteur de pression, d'un amplificateur pneumatique (10) de force de freinage, dans lequel
la dépression qui règne dans une chambre sous vide et/ou la pression de travail d'une chambre de travail de l'amplificateur (10) de force de freinage sont déterminées au moyen d'un capteur de pression (11) qui forme le signal de capteur de pression,
la chambre sous vide de l'amplificateur (10) de force de freinage peut être raccordée fonctionnellement à un cylindre principal (20) de frein pour former une pression de cylindre principal de frein en fonction de la course de la pédale de frein (30), en particulier selon l'une des revendications précédentes,
**caractérisé en ce que**
un capteur de pression (41) est prévu pour déterminer la pression ($p_H$) qui règne dans le cylindre principal de frein et un capteur de course (31) est prévu pour déterminer la course ($s_p$) de la pédale,
**en ce qu'**un dispositif (82) de formation de quotient est prévu pour former le quotient ($p_H/s_p$) entre la pression ($p_H$) qui règne dans le cylindre principal de frein et la course ($s_p$) de la pédale,
**en ce qu'**un bloc fonctionnel (83) est prévu pour former le gradient du quotient ($p_H/s_p$) entre la pression ($p_H$) qui règne dans le cylindre principal de frein et la course ($s_p$) de la pédale,
**en ce qu'**un bloc fonctionnel (84) est prévu pour déterminer un maximum local (4) du gradient du quotient ($p_H/s_p$) entre la pression ($p_H$) qui règne dans le cylindre principal de frein et la course ($s_p$) de la pédale,
**en ce que** des blocs fonctionnels (90, 91) sont prévus pour déterminer un autre point d'activation comme valeur de la pression ($p_H$) qui règne dans le cylindre principal de frein et qui correspond au maximum local (4) qui a été déterminé et
**en ce qu'**une correction du point d'activation calculé est réalisée à l'aide d'un appareil d'activation (60) au moyen de l'autre point d'activation qui a été déterminé.

12. Ensemble selon la revendication 11, **caractérisé en ce que** le gradient de la course ($s_p$) de la pédale est formé au moyen d'un bloc fonctionnel (72), son signe étant ensuite évalué au moyen d'un bloc fonctionnel (73).

13. Ensemble selon la revendication 12, **caractérisé en ce que** pour déterminer l'autre point d'activation, le bloc fonctionnel (90) est configuré comme grille ET à laquelle sont apportés les signaux de sortie du bloc fonctionnel (84) qui détermine le maximum local (4) et du bloc fonctionnel (73) qui évalue le signal du gradient de la course (s$_p$) de la pédale.

14. Ensemble selon l'une des revendications 11 à 13, **caractérisé en ce que** les signaux du capteur de pression (21) qui détermine la pression (p$_H$) qui règne dans le cylindre principal de frein et du capteur de course (31) qui détermine la course (s$_p$) de la pédale sont filtrés au moyen de filtres passe-bas (71, 81) respectifs.

**Fig.1**

**Fig.2**

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005009423 A1

- WO 03066405 A1